# EUROPÄISCHE PATENTSCHRIFT

(11) **EP 2 265 481 B1**
(45) Veröffentlichungstag und Bekanntmachung des Hinweises auf die Patenterteilung: **29.08.2012**
(21) Anmeldenummer: 09726583.9
(22) Anmeldetag: 19.02.2009
(51) Int. Cl.: B60W 20/00, B60W 10/08, B60K 6/48

(54) **VERFAHREN UND VORRICHTUNG ZUR STEUERUNG EINER ELEKTRISCHEN MASCHINE EINES HYBRIDANTRIEBS BEI ERHÖHTER VERFÜGBARKEIT**
METHOD AND DEVICE FOR CONTROL OF AN ELECTRICAL MACHINE OF A HYBRID DRIVE WITH INCREASED AVAILABILITY
PROCÉDÉ ET DISPOSITIF DE COMMANDE D'UN MOTEUR ÉLECTRIQUE D'UN ENTRAÎNEMENT HYBRIDE POUR UNE DISPONIBILITÉ AMÉLIORÉE

(30) Priorität: 01.04.2008 DE 102008000904
(43) Veröffentlichungstag der Anmeldung: 29.12.2010
(73) Patentinhaber: Robert Bosch GmbH, 70442 Stuttgart (DE)
(72) Erfinder: BLIND, Stefan, 70736 Fellbach (DE); YUSHIN, Alexey, 70839 Gerlingen (DE); NIEMANN, Holger, 71640 Ludwigsburg (DE); HEYL, Andreas, 71640 Ludwigsburg (DE)
(86) Internationale Anmeldenummer: PCT/EP2009/051982
(87) Internationale Veröffentlichungsnummer: WO 2009/121660

(56) Entgegenhaltungen:
- EP-A- 1 219 489
- DE-A1-102006 003 254
- US-A1- 2001 049 571
- US-A1- 2007 219 045
- US-A1- 2007 267 231
- US-A1- 2007 276 556

## Beschreibung

### Stand der Technik

Die Erfindung geht aus von Steuermechanismen zum Betrieb von Verbrennungsmotoren und Elektromotoren, die kombiniert als Hybridantrieb eingesetzt werden. Die kombinierte Verwendung von elektrischen Maschinen und Verbrennungsmotoren in einem Hybridantrieb ermöglicht einen höheren Wirkungsgrad bei der Bewegung von Fahrzeugen, sowie eine flexible Anpassung der Betriebsmodi des Antriebaggregats an den gewünschten Fahrmodus. Insbesondere erlaubt ein Hybridantrieb die effiziente Nutzung des Verbrennungsmotors durch die Speicherung von elektrischer Energie, die über die elektrische Maschine als Generator gewonnen wurde, sowie die Wiedergewinnung, d.h. Rekuperation von Bewegungsenergie beim Abbremsen.

Zum einen wird bei Hybridantrieben der Verbrennungsmotor neben der elektrischen Maschine zum Antrieb verwendet, und zum anderen bestehen Hybridantriebkonzepte, in denen die elektrische Maschine als Starter zum Anlassen des Verbrennungsmotors verwendet wird. Auf diese Weise lassen sich ein zusätzlicher Starter-Elektromotor und die zugehörige Ansteuerung einsparen.

Gegenüber üblichen Verbrennungsmotor-Antrieben erfordert ein Hybridantrieb eine komplexe Steuerung, da ein Verbrennungsmotor zusammen mit einer elektrischen Maschine betrieben werden müssen, um den Antrieb vorzusehen, und eine mehrschichtige Steuerung für die elektrische Maschine, da diese sowohl als Fahr-Antriebselement als auch als Anlasser bzw. als Starter verwendet wird.

Bei bekannten Hybridantrieben, bei denen die elektrische Maschine als Starter für den Verbrennungsmotor verwendet wird, wird der Betrieb der elektrischen Maschine überwacht und bei erkannten Fehlern aus Sicherheitsgründen eingeschränkt oder abgestellt. Es werden gemäß dem Stand der Technik Steuerungssysteme verwendet, die die Ansteuerung, die Regelung und die Sensoren der elektrischen Maschine, sowie den Betrieb der elektrischen Maschine selbst überwachen und gegebenenfalls die elektrische Maschine abschalten. Üblicherweise wird die elektrische Maschine sofort abgeschaltet, wenn ein Fehler erkannt wird.

Die gattungsbildende US 2007/276556 A überwacht die Spannung eines Hochvolt-Kreises, die dem Generator zugeführt wird. Liegt diese außerhalb eines Normzustandes, wird der Generator nur als Anlasser verwendet. Das Fahrzeug bewegt sich dann mittels des Verbrennungsmotors.

Bei derartigen Systemen, bei denen ein Fehler zum eingeschränkten Betrieb oder zum Ausstellen der elektrischen Maschine führt, führen die Auswirkungen der Reaktionen auf einen erfassten Fehler dazu, dass das Fahrzeug gegebenenfalls nicht weiter bewegt werden kann. In vielen Fällen, insbesondere wenn der Verbrennungsmotor abgeschaltet ist, führt daher die Unterdrückung oder das Sperren des Betriebs der elektrischen Maschine als Antriebsaggregat dazu, dass der Antrieb funktionsunfähig ist, obwohl der abgeschaltete Verbrennungsmotor prinzipiell zur Fortbewegung zur Verfügung steht. Die Steuerung des Hybridantriebs gemäß dem Stand der Technik sieht daher keine Verfügbarkeit des Hybridmotors vor, wenn allein die elektrische Maschine (oder deren Sensoren/Steuerung) einen Fehler aufweist und dieser erkannt wurde.

Es ist daher eine Aufgabe der Erfindung, ein Steuerungsverfahren und eine Steuerung für einen Hybridmotor vorzusehen, der eine höhere Verfügbarkeit des Hybridantriebs auch im Fehlerfall bietet. Diese Aufgabe wird durch die Merkmale der unabhängigen Ansprüche gelöst.

### Offenbarung der Erfindung

Die Erfindung ermöglicht den Betrieb des Hybridantriebs auch mit einer elektrischen Maschine, die sich nicht mehr als Antriebsaggregat für den Fahrbetrieb eignet, beispielsweise aufgrund von Fehlern in der Steuerung, in der Sensorik oder in der elektrischen Maschine selbst. Mit der erfindungsgemäßen Vorrichtung und dem erfindungsgemäßen Verfahren lassen sich liegen gebliebene Fahrzeuge mit Hybridantrieb aktivieren, deren elektrische Maschine zwar nicht als Antrieb verwendet werden kann, deren Verbrennungsmotor jedoch prinzipiell betriebsbereit ist. Die Stilllegung des gesamten Hybridantriebs bei Fehlern in dem elektrischen Antrieb, d.h. an der elektrischen Maschine, wird mit der erfindungsgemäßen Vorrichtung und dem erfindungsgemäßen Verfahren überwunden. Gemäß der Erfindung ist es möglich, die elektrische Maschine, die sich zwar aufgrund des Fehlers nicht mehr als Antriebskomponente eignet, trotzdem in einer anderen Funktion, d.h. als Anlasser bzw. Starter des Verbrennungsmotors zu betreiben. Dadurch lässt sich auch bei fehlender elektrischer Antriebskomponente der Hybridantrieb aktivieren, indem der Verbrennungsmotor mit der defekten, d.h. nicht zum Antrieb tauglichen elektrischen Maschine, gestartet wird.

Das erfindungsgemäße Konzept liegt darin, den Betrieb der elektrischen Maschine nicht mit einer einzelnen Steuerungskomponente anzusteuern, sondern die beiden Funktionen der elektrischen Maschine, d.h. Antrieb und Starter, hinsichtlich der Aussteuerung oder der Fehlerüberwachung zu trennen. Insbesondere liegt das erfindungsgemäße Konzept darin, für die verschiedenen Funktionen, d.h. Starterfunktion und Antriebsfunktion der elektrischen Maschine, die Steuerung, Überwachung zumindest zeitweise für die einzelnen Funktion zu trennen. Erfindungsgemäß wird daher die Fehlerreaktion bzw. die Fehlerbeurteilung zumindest zeitweilig funktionsspezifisch vorgesehen, um so die elektrische Maschine als Antrieb unabhängig von der elektrischen Maschine als Starter bzw. Anlasser anzusteuern.

Die Erfindung sieht daher vor, zum einen die elektrische Maschine als Antrieb zumindest teilweise oder vollständig zu blockieren, um so Fehlermeldungen Rechnung zu tragen und somit Gefahrensituationen und Schäden an der elektrischen Maschine zu unterbinden. Da der Betrieb der elektrischen Maschine als Anlasser anderen Anforderungen genügen muss, als sie für die elektrische Maschine als Antrieb gelten, wird zum anderen erfindungsgemäß trotz Fehlermeldung die elektrische Maschine zumindest kurzzeitig freigegeben, um ihre Funktion als Anlasser auszuführen. Während bei einer elektrischen Maschine als Antrieb hohe mechanische Leistungen über lange Zeitintervalle erforderlich sind, erfordert der Betrieb des Elektromotors als Starter oder als Anlasser des Verbrennungsmotors des gemeinsamen Hybridantriebs nur eine kurze Zeitdauer, beispielsweise einige Sekunden. Es ist ersichtlich, das zahlreiche Fehlerarten zu einem Abstellen der elektrischen Maschine als Antrieb führen müssen, um das Fahrverhalten nicht zu beeinträchtigen und um Schäden an der elektrischen Maschine oder am Fahrzeug zu vermeiden, wobei die selben Fehlerarten die Funktion der elektrischen Maschine als Anlasser erlauben würden, ohne dass das Fahrverhalten beeinträchtigt wird oder Schädigungen zu erwarten sind. Ferner kann die Ansteuerung der elektrischen Maschine als Starter deutlich einfacher, beispielsweise durch voreingestellte Parameter, vorgesehen werden, wohingegen der Betrieb der elektrischen Maschine als Antrieb deutlich komplexer ist, beispielsweise um dem Fahrerwunsch gerecht zu werden oder um eine ausgewogene Momentensteuerung vorzusehen. Daher ist es möglich, dass auch Fehler in der Steuerung, die den Betrieb der elektrischen Maschine als Antrieb nicht erlauben, den Betrieb der elektrischen Maschine als Anlasser nicht beeinträchtigen, wobei vorzugsweise der Startvorgang durch einen einfachen, voreingestellten Verlauf von Betriebsparametern vorgesehen werden kann. Gleiches gilt für Sensorfehler, die zwar einen längeren und leistungsintensiven Betrieb der elektrischen Maschine als Antrieb nicht erlauben, die jedoch gleichzeitig ohne weitere Nachteile einen kurzzeitigen Betrieb der elektrischen Maschine als Starter mit geringerer Leistung erlauben.

Daher wird ein erfindungsgemäßes Verfahren zur Steuerung einer elektrischen Maschine eines Hybridantriebs vorgesehen, wobei die elektrische Maschine sowohl als Anlasser als auch als Fahrantriebsaggregat des Hybridantriebs betrieben wird, wenn auch nicht gleichzeitig, wobei Betriebsparameter ermittelt werden, aufgrund derer sich Fehler feststellen lassen. Fehler werden festgestellt, wenn ein Betriebsparameterwert nicht einem Betriebsparameter-Normzustand entspricht.

Bezogen auf eine elektrische Maschine können somit als Betriebsparameter die Drehzahl, das abgegebene oder aufgenommene Drehmoment, eine Wicklungsspannung, ein Wicklungsstrom, ein Phasenversatz zwischen Wicklungsspannung und Wicklungsstrom, ein Erregerstrom, eine Temperatur, ein Wicklungs-Innenwiderstand, Magnetfeldstärken oder weitere, für den Betrieb einer elektrischen Maschine relevante Größen betrachtet werden.

Weiterhin gelten als Betriebsparameter bzw. Betriebsparameterwerte Zustände einer Steuerung, die die elektrische Maschine ansteuert oder regelt, wobei Betriebsparameter, die sich auf die Steuerung beziehen, beispielsweise ein Steuerungs-Ausgangssignalwert, der die Drehzahl oder die Antriebsleistung der elektrischen Maschine bestimmt, ein Steuerungs-Eingangssignalwert, der einer Zielvorgabe entspricht, ein Zwischenergebnis, das bei Berechtungen der Steuerung auftritt, ein Tastverhältnis eines Stroms, mit dem die elektrische Maschine angesteuert wird, ein Fehlerdrehmoment, d.h. eine Differenz zwischen Soll- und Ist-Drehmoment, ein Soll-Drehmoment oder ein Ist-Drehmoment überprüft wird, indem jeweilige Werte mit einem Normwertbereich verglichen werden, oder indem Werte durch eine weitere Steuerungskomponente nachgerechnet werden und mit dem jeweiligen Wert verglichen werden. Ferner sollen als Betriebsparameter, die hinsichtlich Fehler überprüft werden, Werte gelten, die sich nur auf die Steuerung selbst beziehen, beispielsweise ein Ergebnis eines Steuerungs-Selbsttests, ein Versorgungsspannungswert der Steuerung oder eine Steuerungstemperatur.

Schließlich sollen als zu überprüfende Betriebsparameterwerte Betriebsparameter eines Sensors gelten, die den Betrieb der elektrischen Maschine überwachen und die der Steuerung Eingangsignale liefern. Derartige, auf einen Sensor bezogene Betriebsparameter sind ein Ausgangssignal des Sensors, wobei das Ausgangssignal mittels eines Normintervalls auf Plausibilität geprüft werden kann, oder mittels eines weiteren Sensorsignals verglichen und/oder hinsichtlich Plausibilität überprüft werden kann, sowie weitere Betriebsparameter, die Rückschlüsse auf die korrekte Funktion des Sensors zulassen. Im Allgemeinen können die Werte auch kombiniert werden, bzw. durch eine gewichtete Summe, so dass sich Abweichungen vom Normwert summieren und als Summe bewertet werden, beispielsweise gegenüber einem Normwert oder einem Normwert-Intervall.

Insbesondere kann die Steuerung in drei Ebenen vorgesehen werden, wobei die erste Ebene eine Momentenkorrelation, die Berechnung von Soll- und Ist-Moment, sowie verschiedene Sensordaten überwacht und gegebenenfalls einen Fehler ausgibt. In der zweiten Ebene wird die Funktion der ersten Ebene überwacht, so dass die zu beurteilenden Betriebsparameter Werte der ersten Ebene umfassen, beispielsweise Berechnungswerte oder Zwischenwerte. Die zweite Ebene umfasst vorzugsweise einen Momentenvergleich, mit dem Rechenfehler der ersten Ebene festgestellt werden können, wobei jedoch auch Sensorfehler festgestellt werden können, vorzugsweise indem mehrere Sensordaten und/oder mehrere Berechnungsdaten in Kombination oder einzeln betrachtet werden, beispielsweise zum Vergleich mit jeweiligen Normbereichen.

In einer dritten Ebene werden Berechnungskomponenten der Steuerung überwacht, beispielsweise durch Überprüfungen von Rechnungen der Ebene 1 und 2 oder durch eigenständige Funktionstests der Steuerung.

Die Betriebsparameter, die im Allgemeinen erfindungsgemäß hinsichtlich eines Fehlers überprüft werden, sind daher weit zu fassen und umfassen nicht nur einzelne Betriebsdaten der elektrischen Maschine, die sich auf jeweilige physikalische Größen beziehen, sondern auch Zustände und Signale, die von einem oder mehreren Sensoren stammen, die den Betrieb der elektrischen Maschine überwachen, sowie Zustände und Werte, die in eine Steuerung oder Regelung der elektrischen Maschine eingegeben werden, in dieser berechnet werden oder von dieser ausgegeben werden. Somit lassen sich nicht nur Fehler an der Maschine selbst, sondern auch an weiteren Komponenten feststellen, die für den Betrieb der elektrischen Maschine erforderlich sind.

Beim Erkennen eines Fehlers wird der Betrieb der elektrischen Maschine in ihrer Funktion als Fahrantriebsaggregat zumindest teilweise eingeschränkt, beispielsweise durch irreversibles Ausschalten des Systems, wobei das System durch eine Werkstatt neu initialisiert werden kann, oder durch Abstellen des Fahrzeugs, bzw. des Hybridantriebs, oder durch ein erneutes Startsignal zum Starten des Betriebs des Hybridantriebs. Beispielsweise wird bei einem dauerhaften Fehler, d.h. bei einem wiederholten Auftreten eines Fehlers, oder bei einem über eine bestimmte Zeitdauer bestehenden Fehlers, das Antriebssystem auch nach einem Startsignal deaktiviert.

Ferner kann als Folge der Fehlererkennung die Leistung oder die Laufdauer der elektrischen Maschine beschränkt werden, beispielsweise indem eine Endstufe, die den elektrischen Motor ansteuert, in einem beschränkten Arbeitsintervall mit begrenzten Strömen arbeitet. Eine derartige Reaktion wird beispielsweise für Fehler vorgesehen, bei denen ein eingeschränkter Betrieb der elektrischen Maschine als Fahrantriebsaggregat noch möglich ist, wobei jedoch die Einschränkungen, beispielsweise hinsichtlich der Ausgangsleistung, dazu führen können, dass die elektrische Maschine aufgrund einer stark verringerten Leistung nicht als Anlasser verwendet werden kann.

Als weitere Reaktion auf erkannte Fehler kann die Steuerung zurückgesetzt werden, beispielsweise durch Abschalten der Endstufe und Initialisieren der Steuerung, wobei einige Fehler auch die Entprellung des Fehlers, d.h. die Korrektur des entsprechenden Betriebsparameters vorsehen. Auch derartige Konsequenzen aus der Erkennung von Fehlern können dazu führen, dass die elektrische Maschine nicht die Funktion eines Anlassers übernehmen kann, obwohl ein Betrieb der elektrischen Maschine als Anlasser (d.h. kurzzeitig mit geringer Leistung) nicht zu Schäden oder Gefahrensituationen führen würde.

Daher wird erfindungsgemäß beim Erkennen eines Fehlers und der entsprechenden Betriebseinschränkung der elektrischen Maschine zumindest kurzzeitig in ihrer Funktion als Anlasser auf eine andere Weise und unabhängig angesteuert, als bei einem Betrieb der elektrischen Maschine als Fahrantriebsaggregat. Um die Steuerungen zumindest kurzzeitig getrennt voneinander vorzusehen, um somit zumindest temporär für die beiden verschiedenen Funktionen der elektrischen Maschine (Anlasser/Fahrantriebsaggregat) unterschiedliche und unabhängige Fehlerkonsequenzen vorzusehen, wird daher von dem erfindungsgemäßen Verfahren und der erfindungsgemäßen Steuerung die elektrische Maschine als Anlasser auf eine andere Weise betrieben (überwacht), d.h. mit geringeren Einschränkungen, als die elektrische Maschine in Funktion als ein Fahrantriebsaggregat.

Vorzugsweise wird aus Sicherheitsgründen eine derartige Trennung nur für einen anfänglichen Zeitrahmen vorgesehen, d.h. für eine Zeitperiode, die zum Starten des Verbrennungsmotors durch die elektrische Maschine geeignet ist. Diese Zeitperiode kann mit dem Auftreten eines Anlasserstartsignals beginnen, wobei das Anlasserstartsignal beispielsweise durch die Betätigung eines Startknopfs durch den Fahrer erzeugt wird. Die Zeitperiode endet vorzugsweise nachdem festgestellt wurde, dass der Verbrennungsmotor läuft, bzw. einen stabilen Zustand erreicht hat, wobei das Ende der Zeitperiode durch entsprechende Betriebsparameter des Verbrennungsmotors erkannt werden kann, die bestimmte Schwellen überschreiten, beispielsweise beim Erreichen einer bestimmten Verbrennungsmotordrehzahl, oder indem eine bestimmte Zeitdauer vorgegeben wird, in der die elektrische Maschine als Anlasser mechanische Leistung an den Verbrennungsmotor überträgt, um diesen zu starten, wobei die vorgegebene Zeitdauer einem Messwert oder Erfahrungswert entspricht, bei dem angenommen werden kann, dass nach dieser Zeit der Verbrennungsmotor einen stabilen Betriebszustand erreicht hat.

Üblicherweise steuert eine übergeordnete Fahrsteuerung den Betrieb des Verbrennungsmotors und der elektrischen Maschine, um gegebenenfalls den Verbrennungsmotor abzustellen, wenn beispielsweise ein bestimmter Batterieladezustand erreicht wurde. In diesem Fall verlässt sich die Fahrsteuerung des Fahrzeugs auf die elektrische Maschine als einziges Fahrantriebsaggregat. Um zu vermeiden, dass ein gewählter oder angewteuerter Fahrmodus, d.h. Fahren nur mit Verbrennungsmotor, nur mit elektrischer Maschine oder Kombination beider Antriebselemente dazu führt, dass die Fahrmodussteuerung den Verbrennungsmotor abschaltet, obwohl aufgrund eines Fehlers die elektrische Maschine nicht als Antrieb betrieben werden kann, wird vorzugsweise auch die übergeordnete Fahrmodussteuerung derart betrieben, dass bei einem festgestellten Fehler nicht ein Fahrmodus gewählt wird, bei dem die elektrische Maschine als einziges Fahrantriebsaggregat betrieben wird. Dies kann durch entsprechende Kopplung zwischen Steuerung der elektrischen Maschine und der Fahrmodussteuerung vorgesehen werden, oder durch eine Fahrmodussteuerung, die einen Fehlersignale empfängt, bzw. Befehle, welche den Konsequenzen aus entdeckten Fehlern an der elektrischen Maschine entsprechen, um so die zur Verfügung stehenden Fahrmodi auf ausführbare Fahrmodi einzuschränken, d.h. auf Fahrmodi, in denen die elektrische Maschine nicht als einziges Fahrantriebsaggregat betrieben wird.

### Ausführungsformen:

Die oben beschriebenen Mechanismen, die zur erfindungsgemäßen zumindest kurzzeitigen Trennung der beiden Funktionen der elektrischen Maschine dienen, können beispielsweise durch eine Doppelfunktions-Einheit vorgesehen werden, wobei die Doppelfunktions-Einheit mit der elektrischen Maschine derart verbunden ist und diese ansteuert, dass bei einem vorliegenden Startwunsch, während ein Fehler der elektrischen Maschine festgestellt wurde, die elektrische Maschine als Anlasser betrieben wird. Der Betrieb als Anlasser kann durch in einen Speicher vorgespeicherte Betriebswerte vorgesehen werden, die einen typischen Startablauf, beispielsweise mit konstanten Betriebsparametern, vorsehen. Um jedoch zu vermeiden, dass trotz Fehler die elektrische Maschine zusätzlicherweise als Antrieb verwendet wird, sieht die Doppelfunktion-Steuerungseinheit vorzugsweise vor, dass sich die Konsequenzen aus dem festgestellten Fehler auf den Betrieb der elektrischen Maschine als Fahrantrieb auswirken, wobei wie oben beschrieben die elektrische Maschine beispielsweise abgestellt werden kann oder hinsichtlich ihrer Betriebsparameter eingeschränkt werden kann.

Die elektrische Maschine als Starter bzw. Anlasser muss den Verbrennungsmotor nur für eine kurze Zeit, beispielsweise weniger als 10 Sekunden, weniger als 5 Sekunden, weniger als 3 Sekunden oder weniger als 2 Sekunden mit mechanischer Leistung versorgen, so dass es genügt, die Steuerung der elektrischen Maschine für ihre beiden Funktionen nur kurzzeitig zu trennen, beispielsweise für die Dauer eines Startvorgangs oder eine Zeitdauer kleiner als 30 Sekunden, kleiner als 10 Sekunden, kleiner als 5 Sekunden, kleiner als 3 Sekunden oder kleiner als 2 Sekunden. Da der erkannte Fehler somit nur kurzzeitig ignoriert wird, bleibt das Gefährdungspotential der fehlerhaften elektrischen Maschine gering, und es wird vermieden, dass Schäden an der elektrischen Maschine durch längeren Betrieb trotz Fehler auftreten.

Das erfindungsgemäße Konzept kann auch dadurch beschrieben werden, dass ein ermittelter Fehler der elektrischen Maschine zwar zum Betrieb als Fahrantriebsaggregat vollständig berücksichtigt wird, wohingegen für die Funktion der elektrischen Maschine als Anlasser ein festgestellter Fehler, zumindest kurzzeitig ignoriert wird, wenn der Start des Verbrennungsmotors gewünscht ist. Die Fehler werden somit unterdrückt bzw. ignoriert, solange sie den Betrieb der elektrischen Maschine als Anlasser betreffen. Dies kann dadurch realisiert werden, dass eine Steuerung eine Logikschaltung umfasst, die zum einen ein Fehlersignal über einen Fehlersignal-Eingang empfängt, und die ein Startsignal über einen StartsignalEingang empfangen kann. Die Logikschaltung verknüpft in diesem Fall den Signalverlauf oder den Pegel des Startsignals mit dem Signalverlauf oder mit dem Pegel des Fehlereingangs, um bei einem vorliegenden Startwunsch (der durch ein entsprechendes Startsignal ausgedrückt wird) das Fehlersignal zumindest kurzzeitig zu unterdrücken. In gleicher Weise kann auch eine Logikschaltung vorgesehen sein, die ein Startsignal mit einem Signal verknüpft, das eine Reaktion der Steuerung auf einen festgestellten Fehler, d.h. ein Aussteuersignal, das beispielsweise dem Blockieren der elektrischen Maschine entspricht, zumindest kurzzeitig unterdrückt. Somit können übliche Fehlersignale vorgesehen werden, die jedoch gegebenenfalls erfindungsgemäß durch ein vorliegendes Startsignal zumindest kurzfristig unterdrückt werden, um die elektrische Maschine trotz Fehler zumindest kurzzeitig als Starter bzw. Anlasser des Verbrennungsmotors verwenden zu können.

Das Unterdrücken des Fehlersignals oder eines Steuersignals, das sich als Konsequenz aus dem Fehlersignal ergibt, kann durch ein "Deaktivierungs"-Bit realisiert werden, das von einer übergeordneten Fahrzeugsteuerung empfangen wird, die daraufhin die Überwachung der elektrischen Maschine kurzzeitig deaktiviert, um somit die Beschränkungen, die sich aus dem Fehler ergeben, zumindest kurzzeitig aufzuheben. Eine derartige übergeordnete Fahrzeugsteuerung kann auch beim Vorliegen eines Startsignals geeignete Betriebsparameter für die elektrische Maschine vorsehen, wie sie für einen Startvorgang geeignet sind. Beispielsweise kann die übergeordnete Fahrzeugsteuerung ein geeignetes Moment und eine geeignete Drehzahl als Soll-Vorgabe an die Steuerung der elektrischen Maschine liefern, die daraufhin die Soll-Vorgaben umsetzt. Wird daraufhin ein erfolgreicher Start des Verbrennungsmotors erfasst, oder ist eine Zeitdauer abgelaufen, nach der ein erfolgreicher Start des Verbrennungsmotors angenommen werden kann, kann die übergeordnete Fahrzeugsteuerung die elektrische Maschine und die Steuerung der elektrischen Maschine wieder in einen Zustand überführen, in dem der Betrieb gemäß dem Fehler eingeschränkt wird oder unterbunden wird. Beispielsweise kann nach einem erfolgreichen Start die übergeordnete Fahrzeugsteuerung das Deaktivierungs-Bit wieder zurücknehmen, um somit die Unterdrückung der Fehlerreaktion durch die Steuerung der elektrischen Maschine wieder aufzuheben. Durch die Aufhebung der Unterdrückung einer üblichen Reaktion auf Fehler wird vorzugsweise die elektrische Maschine in einen sicheren Zustand überführt, der einem eingeschränkten Betrieb der elektrischen Maschine oder einem Abschalten der elektrischen Maschine entspricht. Auf diese Weise wird gewährleistet, dass die elektrische Maschine nicht wieder in Betrieb genommen werden kann, um somit Schäden an der elektrischen Maschine zu vermeiden. Vorzugsweise wird das Fehlersignal, bzw. eine Reaktion hierauf, nicht unterbunden, wenn der Verbrennungsmotor läuft, und somit kein Start des Verbrennungsmotors notwendig ist. Nach Ablauf der Zeitdauer, in der die elektrische Maschine als Anlasser betrieben wird, wird daher vorzugsweise die oben beschriebene Trennung der Funktionen der elektrischen Maschine wieder aufgehoben und der Betriebszustand, der üblicherweise beim Auftreten eines Fehlers eingestellt wird, wird herbeigeführt. Um dem Fahrer zu signalisieren, dass trotz erfolgreichem Start die elektrische Maschine einen Fehler aufweist, kann ein Anzeigeelement aktiviert werden, beispielsweise eine LED oder eine entsprechende Darstellung in einem Display, die den Fahrer darauf hinweist, dass die elektrische Maschine einen Fehler hat und eine Werkstatt angefahren werden soll. Anstatt oder in Kombination zu dem Anzeigeelement könnten andere Signale für den Fahrer abgegeben werden, z.B. akustische Signale.

Wie oben bereits beschrieben, wird vorzugsweise die Fahrmodussteuerung derart eingeschränkt, dass kein Fahrmodus zugelassen wird, in dem die elektrische Maschine als einziger Antrieb verwendet wird, wobei eine derartige Einschränkung, insbesondere während dem Betrieb des Verbrennungsmotors als Antriebsaggregat vorgesehen wird. Mit anderen Worten wird vorzugsweise ein Umschalten des Hybridantriebs auf Nur-Elektroantrieb gesperrt bzw. blockiert, wenn die elektrische Maschine einen Fehler aufweist und der Verbrennungsmotor erfolgreich gestartet wurde.

Um die elektrische Maschine, welche einen Fehler aufweist, in ihrer Funktion als Anlasser nicht unnötig zu belasten, werden gleichzeitig vorzugsweise Kupplungen geöffnet, die die elektrische Maschine mit weiteren Lasten verbindet, beispielsweise mit einer Lichtmaschine, einem Abtriebsstrang, Kompressoren oder Elementen einer Klimaanlage, die eine mechanische Last darstellen. In gleicher Weise ist der Verbrennungsmotor vorzugsweise während des Startvorgangs von weiteren Lasten getrennt, so dass im Wesentlichen das von der elektrischen Maschine erzeugte Drehmoment zumindest größtenteils, d.h. größer als 50 Prozent, größer 80 Prozent oder größer 90 Prozent zum Verbrennungsmotor übertragen wird, und nicht an andere Lasten geht. Beispielsweise kann vor dem Getriebe eine Wandlerkupplung geöffnet werden, bevor der Startvorgang, d.h. das Anlassen des Verbrennungsmotors beginnt. In gleicher Weise wird der Verbrennungsmotor vorzugsweise während der Startphase derart betrieben, dass dieser einen wesentlichen Teil des von der elektrischen Maschine gelieferten Drehmoments aufnimmt und für die Startprozedur verwendet. Daher werden Wandlerkupplungen, die das von der elektrischen Maschine gelieferten Drehmoment empfangen, vorzugsweise größtenteils geöffnet, so dass diese nur einen geringen Anteil des gesamten erzeugten Drehmoments aufnehmen und weitergeben. Anstatt von vorgegebenen Betriebsparametern während der Startphase kann die Steuerung auch eine Regelung vorsehen, die zum Starten des Verbrennungsmotors geeignet ist, um beispielsweise den Drehmomentübertrag geeignet zu regeln. Ferner wird vorzugsweise die Stellung eines Handschaltgetriebes überprüft, so dass ein Startvorgang nur dann möglich ist, wenn das Handschaltgetriebe geöffnet ist. Das heißt, dass die entsprechende Kupplung geöffnet ist, um zu vermeiden, das Drehmoment, das während des Startvorgangs von der elektrischen Maschine erzeugt wird, zum großen Teil an die Räder des Fahrzeugs, in dem der Hybridantrieb vorgesehen ist, übertragen wird. Eine derartige Überprüfung der Stellung des Handschaltgetriebes wird vorzugsweise im Allgemeinen bei allen Hybridantrieben vorgesehen, deren elektrische Maschine sowohl als Antrieb als auch als Starter arbeitet.

Gemäß einer bevorzugten Ausführungsform der Erfindung ist die Steuerung der elektrischen Maschine über eine Verbindung, beispielsweise über eine Leitung, mit einem Hybrid-Steuergerät verbunden, das den Betrieb des gesamten Hybridantriebs als übergeordnetes Steuerbauteil steuert und überwacht. Über eine derartige Verbindung kann beispielsweise das Hybrid-Steuergerät ein Signal an die Steuerung der elektrischen Maschine übermitteln, das die Steuerung dazu veranlasst, die elektrische Maschine erfindungsgemäß zumindest temporär als Anlasser zu betreiben, obwohl die elektrische Maschine aufgrund eines Fehlers in ihrer Funktion als Antrieb abgestellt ist oder eingeschränkt arbeitet. Ferner kann die Steuerung der elektrischen Maschine über diese Verbindung oder über eine andere Verbindung dem daran angeschlossenen Hybrid-Steuergerät mitteilen, wenn ein Startvorgang erfolgreich abgeschlossen wurde, oder wenn das entsprechende Zeitintervall abgelaufen ist, wodurch das Hybrid-Steuergerät die Unterdrückung der üblichen Fehlerreaktion der Steuerung wieder aufheben. kann. Als übliche Fehlerreaktion wird hierbei das teilweise oder vollständige Einschränken des Betriebs der elektrischen Maschine als Fahrantriebsaggregat bezeichnet, welches die Reaktion auf einen festgestellten Fehler darstellt.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: ein Schaubild der erfindungsgemäßen Steuerung im Normalbetrieb (a) und in einem Zustand, der bei einem festgestellten Fehler vorliegt (b).
- Figur 2: ein Ablaufdiagramm einer Ausführung des erfindungsgemäßen Verfahrens.

### Ausführungsformen der Erfindung

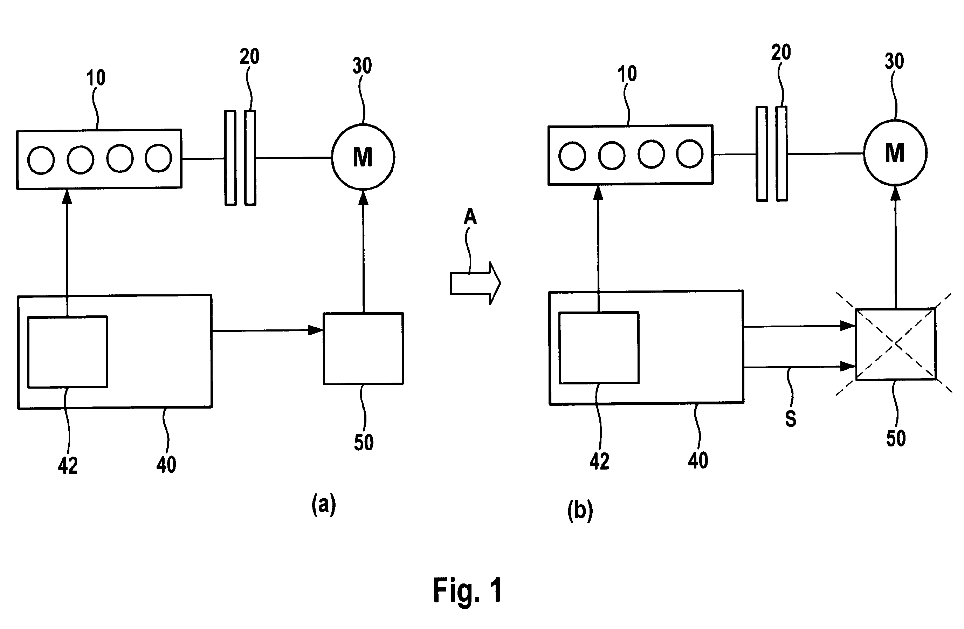

In der Figur 1 ist ein Schaltbild einer Steuerung eines Parallelhybridmotors in zwei Zuständen (a) und b) dargestellt. Die Schaubilder der Figur zeigen einen Verbrennungsmotor 10, der über eine Trennkupplung 20 mit einem Elektromotor 30 verbunden ist. Je nach Ansteuerung und Kupplungszustand der Kupplung 20 überträgt der Verbrennungsmotor 10 und/oder der Elektromotor 30 mechanische Rotationsenergie auf den Antrieb (nicht dargestellt), oder der Verbrennungsmotor 10 überträgt zur Gewinnung elektrischer Energie Rotationsenergie auf den Motor 30 (vorzugsweise bei abgekoppeltem Antrieb), oder der Elektromotor 30 überträgt, in umgekehrter Richtung, über die Trennkupplung 20 mechanische Energie an den Verbrennungsmotor 10, um diesen zu starten. Wie bereits erläutert, sieht der Parallelhybridantrieb ebenso vor, mechanische Energie (d. h. kinetische Rotationsenergie) vom Elektromotor 30 an den Verbrennungsmotor 10 zur Unterstützung des Antriebs zu übertragen.

Ein Steuergerät 40 ist mit dem Verbrennungsmotor 10 und über ein Elektormotor-Steuergerät 50 mit dem Elektromotor 30 verbunden. Beide Verbindungen dienen dazu, eine Momentenanforderung (beispielsweise in Form eines Signals) an den Verbrennungsmotor 10 und an den Elektromotor 30 (vorzugsweise über eine entsprechende Steuerschaltung) zu übertragen. Das Steuergerät 40 ist zur Steuerung des (gesamten) Hybridantriebs vorgesehen, und umfasst ein Verbrennungsmotor-Steuergerät 42. Zur Steuerung des Elektromotors ist ein Elektromotor-Steuergerät 50 vorgesehen, das extern zum Hybridsteuergerät angeordnet ist. In alternativen, nicht dargestellten Ausführungsformen können die Steuerkomponenten, die den einzelnen Motoren zugeordnet sind (das Verbrennungsmotor-Steuergerät 42 und das Elektromotor-Steuergerät 50) beide innerhalb des gesamten Steuergeräts 40 vorgesehen sein, beide außerhalb des Steuergeräts 40 vorgesehen sein oder nur eines hiervon in dem Gesamtsteuergerät 40 vorgesehen sein, wie es in Figur 1 dargestellt ist. Das Gesamtsteuergerät 40 kann als Doppelfunktions-Steuerungseinheit der erfindungsgemäßen Steuerung aufgefasst werden. In der Figur 1 (a) stellen die Pfeile die Übertragungsrichtung der Momentenanforderung dar. Ebenso stellen die entsprechenden Pfeile in der Figur 1(b) die entsprechende Übertragung dar, wobei jedoch der untere Pfeil zwischen dem Steuergerät 40 und dem Elektromotorsteuergerät 50 ein erfindungsgemäßes Signal zur Deaktivierungsüberwachung überträgt. Die Übertragungsrichtung entspricht im Allgemeinen der Pfeilrichtung.

Im Normalbetrieb, wie in Figur 1 (a) dargestellt ist, überträgt das Steuergerät 40 die Momentenanforderung an den Elektromotor über das Elektromotorsteuergerät 50. Tritt jedoch ein Fehler in dem Elektromotor 30 auf, so wird dies vom Elektromotor-Steuergerät 50 erfasst, wodurch, gemäß dem Stand der Technik, der Elektromotor zunächst vollständig ausgeschaltet würde. Jedoch ermöglicht es das erfindungsgemäße Verfahren und die erfindungsgemäße Steuerung, die aus dem Fehler folgende Sperrung bzw. Blockierung des Elektromotors 30 zumindest kurz temporär aufzuheben, um diesen als Anlasser anzusteuern. Hierzu wird in der Schaltung von Figur 1 ein zusätzliches Deaktivierungsüberwachungssignal S von der Steuerung 40 an die Elektromotorsteuerung 50 übertragen, um die von der Elektromotorsteuerung 50 vorgesehene Sperrung für den Startervorgang aufzuheben. Die von der Elektromotorsteuerung 50 vorgesehene Sperrung wird somit aufgehoben, wie es durch die gestrichelten gekreuzten Linien der Elektromotorsteuerung 50 in Figur 1(b) dargestellt ist. Die Aufhebung der Steuerung, die die Elektromotorsteuerung vorsieht, ist jedoch nur temporär, sodass die gestrichelten gekreuzten Linien nicht für den (gesamten) Antriebsmodus des Elektromotors gelten. Vorzugsweise wird während der Aufhebung der Blockierung, die die Elektromotorsteuerung 50 vorsieht, das von der Steuerung 40 abgegebene Momentenanforderungssignal direkt an den Motor 30 weitergeleitet, obwohl dies gemäß dem Stand der Technik die Elektromotorsteuerung im Fall eines Fehlers vollständig unterbinden würde.

Das Signal S ist somit ein "Override"-Signal, das jedoch nur kurzfristig die Elektromotorsteuerung 50 außer Kraft setzt, um zumindest eine kurze Starterphase des Elektromotors 30 zu ermöglichen. Das Signal S kann über eine eigene Steuerungsleitung übertragen werden, oder kann einen eigenen logischen Kanal beanspruchen, der die Steuerung 40 mit der Elektromotorsteuerung 50 verbindet.

Ferner kann die Steuerung 40, die Elektromotorsteuerung 50 oder beide über eine Ausgabeeinheit (Steuerung 40) oder über eine Eingabeeinheit bzw. Ausgabeeinheit (Elektromotorsteuerung 50) verfügen, die einen dauerhaften Aktivzustand des Aufhebungssignals S (Override-Signal) verhindert, beispielsweise ein RC-Glied, ein monostabiler Flip-Flop oder ein entsprechendes Software-Segment, das in der Steuerung 40 bzw. in der Elektromotorsteuerung 50 abläuft. Ferner kann das Signal S ein Deaktivierungsüberwachungssignal, sein, beispielsweise ein Deaktivierungsbit, das der Steuerung 40 die Überwachung der Aufhebung der Blockierung der Elektromotorsteuerung 50 überwacht, wobei hierzu ein Startersignal von der Elektromotorsteuerung 50 zur Steuerung 40 übertragen werden muss (die entsprechende Pfeilrichtung ist nicht dargestellt). Dadurch ist es dem Steuergerät selbst möglich, die Blockierung der Fehlerreaktion der Elektromotorsteuerung 50 nicht nur zu steuern, sondern auch zu überwachen. Eine derartige Überwachung erlaubt die Erfassung des Fehlergrads (kein Betrieb möglich/eingeschränkter Betrieb als Starter möglich), sowie die Unterscheidung von Fehlern des Elektromotors, die einen Startvorgang erlauben, von Fehlern, die den Betrieb des Elektromotors vollständig ausschließen.

Ferner kann die Steuerung 40 mit der Trennkupplung 20 und weiteren Kupplungen verbunden sein, um diese anzusteuern und/oder um deren Kupplungsstatus abzufragen. Die Abfrage des Kupplungsstatus kann dann erforderlich sein, wenn ein Startvorgang mit mechanisch angekoppeltem Abtrieb erkannt und verhindert werden soll. Derartige Verbindungen zwischen Steuerung und Kupplung sind aus Gründen der Übersichtlichkeit in Figur 1 nicht dargestellt.

Der Übergang des in Figur 1(a) dargestellten Zustands in den Zustand, der in der Figur 1(b) dargestellt ist, wird durch ein Fehlersignal beispielsweise durch einen Fehler in der Elektromotorsteuerung hervorgerufen. Da das Steuersignal S erfindungsgemäß für den Startvorgang die Funktion (und damit im Falle des genannten Beispiels auch die Fehlfunktion) der Elektromotorsteuerung 50 aufhebt, wird ein Startvorgang auch bei defekter Elektromotorsteuerung möglich. Der Pfeil A bezeichnet einen solchen Übergang, der durch einen Fehler in der Elektromotorsteuerung hervorgerufen wird. Ferner kann der Pfeil A ein erkannter Fehler im Elektromotor 30 sein, der zwar die Funktion als Antrieb ausschließt, jedoch die Funktion des Elektromotors als Starter zulässt. Ferner kann der Übergang A durch die oben aufgeführten Fehlerarten (beispielsweise Sensorfehler oder Auswertungsfehler oder Sensorsignal-Übertragungsfehler) hervorgerufen werden. Vorzugsweise werden die Fehler, die den Übergang A auslösen, durch die Steuerung 40 oder durch eine übergeordnete Steuerung erfasst, wobei die Komponente, welche den Fehler erfasst, vorzugsweise auch das kurzzeitige Unterbinden der Fehlerreaktion steuert bzw. auslöst, vorzugsweise durch Abgeben eines Signals S oder entsprechender Befehle.

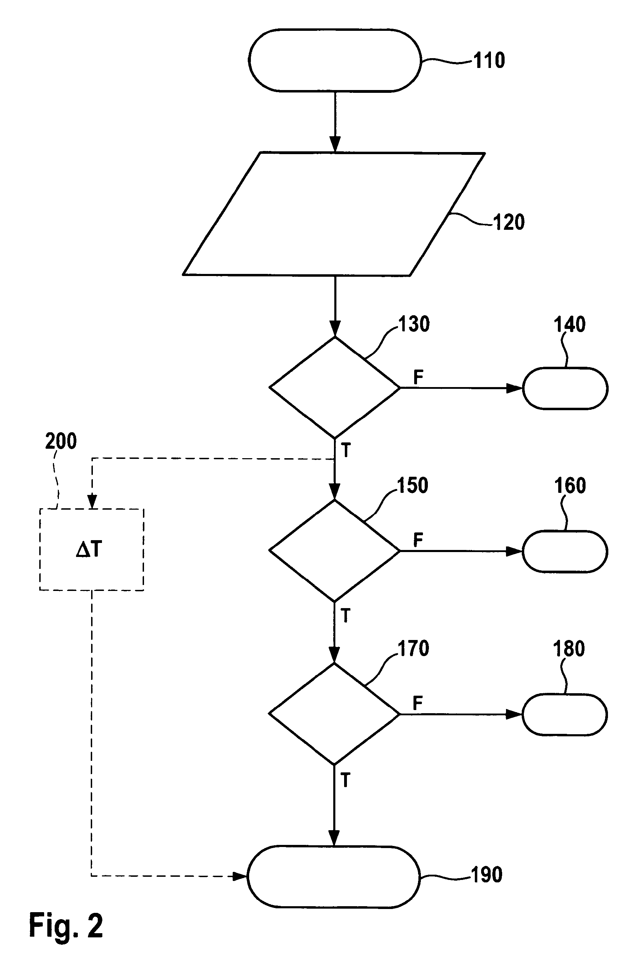

Die Figur 2 zeigt ein Ablaufdiagramm einer Ausführung des erfindungsgemäßen Verfahrens in Form eines Flussdiagramms nach DIN 66001 bzw. ISO 5807. Das Verfahren startet mit Schritt 110, woraufhin mindestens ein Betriebsparameterwert, beispielsweise eine Temperatur, in Schritt 120 empfangen wird, beispielsweise von einem Sensor. Ferner wird in Schritt 120 eine Betriebsmodusvorgabe empfangen, die die elektrische Maschine betrifft. Die Betriebsmodusvorgabe kann von einer Steuerung und/oder von einem Bediener stammen und gibt an, ob die elektrische Maschine als Starter bzw. Anlasser für den Verbrennungsmotor oder als Fahrantriebsaggregat, d.h. zur Traktion, verwendet werden soll. Bevor die Betriebsmodusvorgabe umgesetzt wird, wird erfindungsgemäß eine Fehlerabfrage durchgeführt, um zu ermitteln, ob der einzustellende Betriebsmodus zulässig ist. Im darauf folgenden Schritt 130 wird zur Ermittlung eines Fehlers der Betriebsparameter mit einem zulässigen Sollwertbereich verglichen. Anstatt des Vergleichs 130 und der Eingabe 120 kann auch eine Fehlereingabe erfolgen (nicht dargestellt), die einen Fehler wiedergibt, der an der elektrischen Maschine oder an einer zugehörigen Motorsteuerung festgestellt wurde (bsp. durch Überwachungseinrichtungen). Wird kein Fehler in Schritt 130 ermittelt, (F, false), wird die elektrische Maschine in Schritt 140 gemäß der Betriebsmodusvorgabe betrieben. Bis zu diesem Schritt ähnelt das erfindungsgemäße Verfahren bekannten Verfahren zur überwachten Steuerung von elektrischen Maschinen.

Im folgenden wird anhand des Flussdiagramms der Figur 2 die erfindungsgemäße Unterscheidung gemäß der Schwere eines erfassten Fehlers beschrieben, sowie die daraus folgenden Betriebsschritte. Erfasst somit in Schritt 130 das Verfahren bzw. die erfindungsgemäße Steuerung einen Fehler (T, true), so wird die elektrische Maschine nicht vollständig blockiert, wie es bei Verfahren gemäß dem Stand der Technik der Falls ist, sondern es werden weitere Unterscheidungen getroffen wie sie im weiteren beschrieben sind. Nach einem eingegebenen oder durch Vergleich ermittelten Fehler (Abzweigung 130, T) wird in Schritt 150 überprüft, ob der Fehler schwerwiegend ist und aus Sicherheitsgründen die elektrische Maschine vollständig blockiert werden soll, oder ob lediglich der Betrieb der elektrischen Maschine als Fahrantriebsaggregat blockiert werden soll. Wird in Schritt 150 ermittelt, dass auch der Betrieb als Starter aufgrund der Schwere des Fehlers blockiert werden soll (F, false, Fehler lässt Betrieb als Starter nicht zu), dann wird in Schritt 160 der Betrieb der elektrischen Maschine vollständig blockiert. Wird hingegen in Schritt 150 ermittelt, dass der Fehler den Betrieb als Starter zulässt (T, true, Fehler lässt Betrieb als Starter zu), dann wird in Schritt 170 abgefragt, ob der einzustellende Betriebsmodus einem Betrieb als Starter entspricht. Falls dies nicht zutreffend ist (F, false, Betriebsmodus = Betrieb als Fahrantriebsaggregat, d.h. Betriebsmodus ist nicht Starter-Betriebsmodus), dann wird die elektrische Maschine in Schritt 180 blockiert. Eine gegebenenfalls in 160 eingeleitete Blockierung bleibt somit aufrecht. Schritt 160 ist somit äquivalent zu Schritt 180. Falls in Schritt 170 hingegen ermittelt wird, dass der einzustellende Betriebsmodus einem Betrieb als Starter entspricht (T, true), wird die elektrische Maschine in Schritt 190 als Starter betrieben. Vorzugsweise wird ferner in Schritt 190 der Betrieb der elektrischen Maschine als Fahrantriebsaggregat blockiert. Eine derartige Blockade kann auch in Schritt 160 vorgesehen werden. In diesem Fall wird die Blockade in Schritt 190 aufrecht erhalten.

In einer bevorzugten Ausführungsform der Erfindung wird trotz erfasstem Fehler ein zeitlich begrenzter Betrieb als Starter zugelassen, wenn die Fehlerart dies zulässt (d.h. eine geringe Schwere des erfassten Fehlers). Die Implementierung des zeitlich begrenzten Betriebs ist in Fig. 2 mit gestrichelten Linien dargestellt. Wird daher in Schritt 130 erfasst, dass ein Fehler vorliegt, wird ab Erfassen des Fehlers eine vorbestimmte Zeitdauer ΔT vorgesehen, vgl. Schritt 200, vorzugsweise mittels eines Timers. Wird dann in Schritt 170 ermittelt, dass der Betrieb des elektrischen Maschine als Starter durchgeführt werden soll, wird vor Einleiten des Schritts 190 (Betrieb als Starter) abgefragt, ob die vorbestimmte Zeitdauer noch läuft. Die Abfrage ist in Figur 2 aus Gründen der Klarheit nicht dargestellt. Falls Schritt 170 T (true) ergibt und die Zeitdauer ΔT noch nicht abgelaufen ist, dann wird Schritt 190 ausgeführt. Falls Zeitdauer ΔT abgelaufen ist, wird die elektrische Maschine auch für den Startermodus blockiert (nicht dargestellt), selbst wenn Schritt 170 "true" ergibt. Schritt 200 stellt somit eine weitere Vorbedingung für Schritt 190 dar.

Die Figur 2 weicht insofern aus Gründen der Klarheit von der Normdarstellung ab, als dass die Verzweigung nicht dargestellt ist, die von der Vorbedingung von Schritt 200 vorgesehen wird. Die Abfrage bzw. Verzweigung, die sich aus der vorbestimmten Zeitdauer ΔT bzw. aus Schritt 200 ergibt, sowie die daraus folgende Blockierung, ist in Fig. 2 nicht dargestellt. Ebenso ist eine erfindungsgemäße Rückführung von den Blockierungen 160, 180 oder von Schritt 190 zum Start 110, zu Schritt 120 oder zu den Abfragen 130, 150 oder 170 nicht dargestellt, die zu einer automatischen Aufhebung der Blockierung führen würde, wenn sich ein anderer Fehlerzustand (kein Fehler / Fehler mit geringer Schwere, der Betrieb als Starter zulässt) ergibt. Grundsätzlich können die Abfrageschritte in Fig. 2 auch zusammengefasst und/oder vertauscht werden, soweit gegeben ist, dass sich die gleichen logischen Verknüpfungen ergeben, wie sie durch die Abfragen definiert sind.

## Patentansprüche

1. Verfahren zur Steuerung einer elektrischen Maschine (30) eines Hybridantriebs, wobei die elektrischen Maschine (30) sowohl als Anlasser eines Verbrennungsmotors (10) des Hybridantriebs als auch als ein Fahrantriebsaggregat des Hybridantriebs betrieben wird, wobei das Verfahren umfasst:
Ermitteln (120) zumindest eines Betriebsparameterwerts, der einen Betriebsparameter der elektrischen Maschine (30) wiedergibt;
Feststellen eines Fehlers (130), wenn zumindest einer der zumindest einen Betriebsparameterwerte nicht einem Betriebsparameter-Normzustand entspricht;
zumindest teilweises Einschränken (190) des Betriebs der elektrischen Maschine (30) als Fahrantriebsaggregat, wenn ein festgestellter Fehler vorliegt; und zumindest temporäres Betreiben (190) der elektrischen Maschine (30) als Anlasser und unabhängig von dem Betreiben der elektrischen Maschine (30) als Fahrantriebsaggregat, wenn ein festgestellter Fehler vorliegt, **dadurch gekennzeichnet, dass** der Fehler einer Fehlfunktion eines Sensors der elektrischen Maschine (30), einer Fehlfunktion einer Steuerung (50) der elektrischen Maschine (30) oder einer Fehltunktion der elektrischen Maschine (30) selbst entspricht.

2. Verfahren nach Anspruch 1, wobei das zumindest temporäre Betreiben der elektrischen Maschine als Anlasser umfasst:
Betreiben der elektrischen Maschine (30) gemäß vorgegebenen Anlasser-Betriebsparametern oder gemäß einer vorgegebenen Anlasser-Betriebsverlaufvorgabe während einer Zeitperiode, die mit dem Vorliegen eines Anlasserstartsignals beginnt und nach einer vorbestimmten Zeitdauer (ΔT) oder mit dem Ende einer Startphase des Verbrennungsmotors endet; und/oder temporäres Freigeben eines Startsignaleingangs, temporäres Aufheben einer Sperrung der elektrischen Maschine (30) oder temporäres Deaktivieren einer Überwachungs- oder Steuerungsfunktion der elektrischen Maschine (30) nach dem Feststellen des Fehlers für eine vorbestimmte Zeitdauer (ΔT) oder bis die Startphase des Verbrennungsmotors beendet ist.

3. Verfahren nach einem der vorangehenden Ansprüche, wobei die zumindest einen Betriebsparameterwerte eine oder mehrere der folgenden Größen umfassen:
ein Sensor-Ausgangssignalwert, der von einem Sensor der elektrischen Maschine (30) vorgesehen wird;
ein Steuerungs-Ausgangssignalwert, ein Steuerungs-Eingangssignalwert, ein Steuerungs-Zwischenergebnis, ein Steuerungs-Selbsttestergebnis, ein Tastverhältnis des Phasenwicklungsstroms, ein Fehler-Drehmoment vorgesehen als Differenz zwischen einem Soll-Drehmoment und einem Ist-Drehmoment, ein Soll-Drehmoment oder ein Ist-Drehmoment, die jeweils von einer Steuerung (50) der elektrischen Maschine vorgesehen werden,
eine Temperatur, ein Drehmoment, eine Drehzahl, ein Erregerstrom, eine Phasenwicklungsspannung, ein Phasenwicklungsstrom, eine Phasenlage eines Wicklungsstroms oder ein Wicklungs-Innenwiderstand der elektrischen Maschine (30).

4. Verfahren nach einem der vorangehenden Ansprüche, mit einem Schritt des Überwachens der elektrischen Maschine (30), wobei das Überwachen das Feststellen eines Fehlers (130, 150) umfasst, wobei das Überwachen mindestens eine der folgenden Überwachungsebenen (a) - (c) umfasst:
(a) Überwachen und Koordinieren von Drehmomenten der elektrischen Maschine (30) und Drehmomenten eines damit verbundenen Fahrzeugabtriebs, Berechnen von Soll-Drehmoment und Ist-Drehmoment der elektrischen Maschine (30) und Verifizieren der Plausibilität von Sensorsignalen eines Sensors der elektrischen Maschine;
(b) Überwachen mindestens einer der Funktionen der Überwachungsebene (a), Überwachen der Berechnungen der Überwachungsebene (a), Überwachen der in der Überwachungsebene (a) verifizierten Sensorsignale und Erfassen von Sensorfehlern; und
(c) Überwachen der Funktionsfähigkeit derjenigen Vorrichtungen, die die von den Überwachungsebenen (a) und (b) vorgesehenen Funktionen, Berechnungen, Überwachungen, Erfassungen und Verifikationen vorsehen.

5. Verfahren nach einem der vorangehenden Ansprüche, wobei das zumindest teilweise Einschränken des Betriebs der elektrischen Maschine (30) umfasst:
- Rücksetzen einer Steuerung (40, 50), die den Betrieb der elektrischen Maschine (30) steuert, umfassend: Setzen einiger oder aller Zustandsparameter der Steuerung (40, 50) auf einen Anfangswert, Abschalten einer Endstufe, die die elektrische Maschine (30) ansteuert, Einschränken der Maximalleistung der Endstufe auf einen Grundbetrieb-Leistungswert durch Einschränken eines Ansteuersignals der Endstufe oder eine Kombination hiervon;
- Einführen einer Beschränkung .des Betriebs der Endstufe hinsichtlich einer Ansteuerdauer, einer gemittelten Ausgangsleistung, einer Spitzen-Ausgangsleistung der Endstufe oder einer Kombination hiervon durch Versetzen der elektrischen Maschine (30) auf einen Ersatzbetriebzustand; oder
- Abschalten und Sperren (160, 180) der elektrischen Maschine (30), einem Steuerungselement (50) der elektrischen Maschine, der Endstufe der elektrischen Maschine oder eines Antriebsystemsystems, das die elektrische Maschine (30) umfasst, wobei die Sperrung durch das Anlasserstartsignal oder durch ein werkstattseitiges Rücksetzen aufhebbar ist.

6. Verfahren nach einem der vorangehenden Ansprüche, wobei, wenn ein festgestellter Fehler vorliegt, eine Fahrmodussteuerung des Hybridantriebs auf alle Betriebsmodi beschränkt wird, in denen die elektrische Maschine nicht als einziges Fahrantriebsaggregat betrieben wird.

7. Steuerung mit einem Stellsignal-Ausgang, der zum Anschluss und zur Steuerung einer elektrischen Maschine (30) eines Hybridantriebs vorgesehen ist, und mit einem Betriebsparameter-Eingang, der mit der elektrischen Maschine zum Empfang von zumindest einem Betriebsparameter der elektrischen Maschine verbunden ist, wobei
die Steuerung eingerichtet ist, die elektrische Maschine (30) sowohl in der Funktion eines Anlasser eines Verbrennungsmotors (10) des Hybridantriebs als auch in der Funktion eines Fahrantriebsaggregats des Hybridantriebs zu betreiben, und
die Steuerung ferner eingerichtet ist, einen Fehler in der elektrischen Maschine (30) durch Bewerten (150) des mindestens einen Betriebsparameters, einen Fehler an mindestens einem an der elektrischen Maschine (30) verbundenen Sensor durch Bewerten (150) von Signalen an dem Betriebsparameter-Eingang, einen Fehler von zumindest einer Steuerungskömponente der Steuerung durch Überwachen der zumindest einen Steuerungskomponente, oder eine Kombination dieser Fehler zu erkennen; wobei
die Steuerung eine damit verbundene Doppelfunktion-Steuerungseinheit (40) umfasst, die die Steuerung der elektrischen Maschine (30) als Fahrantriebsaggregat sowie die Steuerung der elektrischen Maschine (30) als Anlasser eines Verbrennungsmotors (10) des Hybridantriebs vorsieht, und die eingerichtet ist, im Falle eines Fehlers die elektrischen Maschine (30) zum Betrieb als Anlasser anzusteuern (190), und, unabhängig vom Betrieb als Anlasser, im Falle eines Fehlers den Betrieb der elektrischen Maschine (30) als Fahrantriebsaggregat zumindest teilweise einzuschränken.

8. Steuerung nach Anspruch 7, wobei die Doppelfunktion-Steuerungseinheit (40) eine damit verbundene Logikschaltung umfasst, die einen Fehlersignal-Eingang aufweist, dessen Pegel das Vorliegen des Fehlers wiedergibt, und die einen Startsignaleingang umfasst, wobei die Logikschaltung ferner einen Startwunsch-Eingang aufweist, dessen Pegel den Fahrerwunsch zum Starten des Hybridantriebs oder des Verbrennungsmotors (10) des Hybridantriebs wiedergibt, wobei die Logikschaltung beide Pegel logisch verknüpft und bei Vorliegen des Fehlers ohne gleichzeitigen Startwunsch die Doppelfunktion-Steuerungseinheit zum teilweisen oder vollständigen Einschränken des Betriebs der elektrischen Maschine (30) als Fahrantriebsaggregat veranlasst, und bei Vorliegen des Fehlers mit gleichzeitigem Startwunsch die Doppelfunktion-Steuerungseinheit (40) zum Betrieb der elektrischen Maschine (30) als Anlasser veranlasst.

9. Steuerung nach Anspruch 7 oder 8, die ferner eine Zeitverzögerungsschaltung (ΔT) aufweist, die eingerichtet ist, ein Fehlersignal, dessen Pegel den Fehler wiedergibt, an einem Verzögerungseingang der Zeitverzögerungsschaltung für eine Zeitdauer zurückzuhalten und erst nach Ablauf der Zeitdauer an zumindest eine Komponente der Steuerung über einen verzögerten Ausgang der Zeitverzögerungsschaltung (ΔT) weiterzugeben, die im Falle eines Fehlers den Betrieb der elektrischen Maschine (30) als Anlasser einschränkt, wobei zumindest eine Komponente der Steuerung, die im Falle eines Fehlers den Betrieb der elektrischen Maschine (30) als Fahrantriebsaggregat zumindest teilweise einschränkt, ein Signal empfängt, das dem Signal am Verzögerungseingang entspricht, und die Zeitdauer mindestens der Dauer einer Anlassphase des Verbrennungsmotors entspricht

10. Steuerung nach einem der Ansprüche 7 bis 9, die einen Steuerausgang für eine elektrische Maschine (30) umfasst, die als Fahrantriebsaggregat eines Hybridantriebs und als Anlasser eines Verbrennungsmotors (10) des Hybridantriebs vorgesehen ist, wobei die Steuerung als Doppelfunktion-Steuerungs-einheit ausgebildet ist und ferner einen Fehlereingang umfasst, dessen Pegel einen Fehler in einer Steuerung der elektrischen Maschine (30), in einem Sensor der elektrischen Maschine (30) oder in der elektrischen Maschine (30) selbst wiedergibt;
die Doppelfunktion-Steuerungseinheit (40) eingerichtet ist, ein Startwunschsignal zum Starten des Verbrennungsmotors bei Vorliegen eines Signals am Fehlereingang, das einen Fehler wiedergibt, innerhalb einer vorbestimmten Zeitdauer an den Steuerausgang weiterzugeben; und
die Doppelfunktion-Steuerungseinheit (40) eine Verzögerungsschaltung mit der Zeitdauer umfasst, die mindestens der Dauer einer Anlassphase des Verbrennungsmotors (10) entspricht, oder wobei die Doppelfunktion-Steuerungseinheit einen Verbrennungsmotor-Zustandseingang mit einem Zustandswert umfasst, wobei die Zeitdauer dann endet, wenn der Zustandswert das Ende der Anlassphase wiedergibt.

## Claims

1. Method for controlling an electrical machine (30) of a hybrid drive, and the electrical machine (30) is operated both as a starter of an internal combustion engine (10) of the hybrid drive and as a traction drive unit of the hybrid drive, and the vehicle comprises:
determination (120) of at least one operating parameter value which represents an operating parameter of the electrical machine (30);
detection of a fault (130) if at least one of the at least one operating parameter values does not correspond to an operating parameter normal status;
at least partial restriction (190) of the operation of the electrical machine (30) as a traction drive unit if a detected fault is present; and
at least temporary operating (190) of the electrical machine (30) as a starter and as a traction drive unit independently of the operation of the electrical machine (30) if a detected fault is present, **characterized in that** the fault corresponds to a malfunction of a sensor of the electrical machine (30), a malfunction of a controller (50) of the electrical machine (30) or a malfunction of the electrical machine (30) itself.

2. Method according to Claim 1, wherein the at least temporary operation of the electrical machine as a starter comprises:
operation of the electrical machine (30) according to predefined starter operating parameters or according to a predefined starter operating profile preset value during a time period which starts with the presence of a starter starting signal and ends after a predetermined time period (ΔT) or with the end of a starting phase of the internal combustion engine; and/or temporary enabling of a starting signal input, temporary cancelling of disabling of the electrical machine (30) or temporary deactivation of a monitoring function or control function of the electrical machine (30) after the detection of the fault for a predetermined time period (ΔT) or until the starting phase of the internal combustion engine has ended.

3. Method according to one of the preceding claims, wherein the at least one operating parameter values of one or more of the following variables comprise:
a sensor output signal value which is provided by a sensor of the electrical machine (30);
a controller output signal value, a controller input signal value, a controller intermediate result, a controller self test result, a pulse duty factor of the phase winding current, a fault torque provided as a difference between a setpoint torque and an actual torque, a setpoint torque or an actual torque which are each provided by a controller (50) of the electrical machine,
a temperature, a torque, a rotation speed, an exciter current, a phase winding voltage, a phase winding current, a phase position of a winding current or a winding internal resistance of the electrical machine (30).

4. Method according to one of the preceding claims, having a step of monitoring the electrical machine (30), wherein the monitoring comprises the detection of a fault (130, 150), wherein the monitoring comprises at least one of the following monitoring levels (a)-(c):
(a) monitoring and coordination of torques of the electrical machine (30) and torques of a vehicle output connected thereto, calculation of the setpoint torque and actual torque of the electrical machine (30) and verification of the plausibility of sensor signals of a sensor of the electrical machine;
(b) monitoring of at least one of the functions of the monitoring level (a),
monitoring of the calculations of the monitoring level (a), monitoring of the sensor signals verified in the monitoring level (a) and detection of sensor faults; and
(c) monitoring of the functional capability of those devices which provide the functions, calculations, monitoring operations, detection operations and verification operations provided by the monitoring levels (a) and (b).

5. Method according to one of the preceding claims, wherein the at least partial restriction of the operation of the electrical machine (30) comprises:
- resetting of a controller (40, 50) which controls the operation of the electrical machine (30), comprising: setting of some or all of the status parameters of the controller (40, 50) to an initial value, switching off an output stage which actuates the electrical machine (30), restriction of the maximum power of the output stage to a basic operating power value by restricting an actuation signal of the output stage or a combination thereof;
- introduction of a restriction of the operation of the output stage with respect to an actuation period, an averaged output power, a peak output power of the output stage or a combination thereof by adjusting the electrical machine (30) to a standby operating status; or
- switching off and disabling (160, 180) the electrical machine (30), a control element (50) of the electrical machine, the output stage of the electrical machine or of a drive system which comprises the electrical machine (30), wherein the disabling can be cancelled by the starter starting signal or by resetting at the workshop.

6. Method according to one of the preceding claims, wherein if a detected fault is present, a driving mode controller of the hybrid drive is restricted to all the operating modes in which the electrical machine is not operated as a single traction drive unit.

7. Controller having an actuation signal output which is provided for connection and for control of an electrical machine (30) of a hybrid drive, and having an operating parameter input which is connected to the electrical machine for receiving at least one operating parameter of the electrical machine, wherein
the controller is configured to operate the electrical machine (30) both in the function of a starter of an internal combustion engine (10) of the hybrid drive and in the function of a traction drive unit of the hybrid drive,
and
the controller is also configured to detect a fault in the electrical machine (30) by evaluating (150) the at least one operating parameter, a fault at at least one sensor connected to the electrical machine (30) by evaluating (150) signals at the operating parameter input, a fault of at least one control component of the controller by monitoring the at least one control component, or a combination of these faults; wherein
the controller comprises a double-function control unit (40) which is connected thereto and which provides the controller of the electrical machine (30) as a traction drive unit and the controller of the electrical machine (30) as a starter of an internal combustion engine (10) of the hybrid drive and which is configured to actuate (190) the electrical machine (30) for operation as a starter in the case of a fault, and to at least partially restrict, independently of the operation of the starter, the operation of the electrical machine (30) as a traction drive unit in the case of a fault.

8. Controller according to Claim 7, wherein the double-function control unit (40) comprises a logic circuit which is connected thereto and which has a fault signal input whose level represents the presence of the fault, and which comprises a starting signal input, wherein the logic circuit also has a starting request input whose level represents the driver's request for starting the hybrid drive or the internal combustion engine (10) of the hybrid drive, wherein the logic circuit logically combines both levels, and if the fault is present without a simultaneous starting request said logic circuit causes the double-function control unit to partially or completely restrict the operation of the electrical machine (30) as a traction drive unit, and if the fault is present with a simultaneous starting request said logic circuit causes the double-function control unit (40) to operate the electrical machine (30) as a starter.

9. Controller according to Claim 7 or 8 which also has a time delay circuit (ΔT) which is configured to hold back a fault signal whose level represents the fault to a delay input of the time delay circuit for a time period and not to pass it on to at least one component of the controller until after the expiry of the time period, via a delayed output of the time delay circuit (ΔT) which, in the case of a fault, restricts the operation of the electrical machine (30) as a starter, wherein at least one component of the controller which at least partially restricts the operation of the electrical machine (30) as a traction drive unit in the case of a fault receives a signal which corresponds to the signal at the delay input, and the time period corresponds at least to the period of a starting phase of the internal combustion engine.

10. Controller according to one of Claims 7 to 9, which comprises a control output for an electrical machine (30) which is provided as a traction drive unit of a hybrid drive and as a starter of an internal combustion engine (10) of the hybrid drive, wherein the controller is embodied as a double-function control unit and also comprises a fault input whose level represents a fault in a controller of the electrical machine (30), in a sensor of the electrical machine (30) or in the electrical machine (30) itself;
the double-function control unit (40) is configured to pass on a starting request signal within a predetermined time period to the control output in order to start the internal combustion engine if a signal is present at the fault input which represents a fault; and
the double-function control unit (40) comprises a delay circuit with the time period which corresponds at least to the duration of a starting phase of the internal combustion engine (10), or wherein the double-function control unit comprises an internal combustion engine status input with a status value, wherein the time period ends when the status value represents the end of the starting phase.

## Revendications

1. Procédé de commande d'un moteur électrique (30) d'un entraînement hybride, le moteur électrique (30) étant entraîné pour servir de démarreur à un moteur à combustion interne (10) de l'entraînement hybride ainsi que de groupe d'entraînement en conduite de l'entraînement hybride, le procédé comprenant :
le calcul (120) d'au moins une valeur de paramètre de fonctionnement rendant compte d'un paramètre de fonctionnement du moteur électrique (30) ;
le constat d'une anomalie (130) lorsqu'au moins une valeur parmi les au moins une valeur de paramètre de fonctionnement ne correspond pas à un état normal du paramètre de fonctionnement ;
la limitation (190) au moins partielle du fonctionnement du moteur électrique (30) comme groupe d'entraînement en conduite lorsqu'une anomalie est constatée ; et
l'exploitation (190) au moins temporaire du moteur électrique (30) comme démarreur et indépendamment de l'exploitation du moteur électrique (30) comme groupe d'entraînement en conduite lorsqu'une anomalie est constatée ;
**caractérisé en ce que** l'anomalie correspond à un dysfonctionnement d'un capteur du moteur électrique (30), à un dysfonctionnement d'un élément de commande (50) du moteur électrique (30) ou à un dysfonctionnement du moteur électrique (30) lui-même.

2. Procédé selon la revendication 1, l'exploitation au moins temporaire du moteur électrique comme démarreur comprenant :
l'exploitation du moteur électrique (30) suivant des paramètres de fonctionnement du démarreur prédéfinis ou suivant une instruction de trajectoire de fonctionnement du démarreur prédéfinie pendant une période de temps commençant avec un signal de démarrage du démarreur et prenant fin après une durée prédéfinie (ΔT) ou avec la fin d'une phase de démarrage du moteur à combustion interne ; et/ou
le déclenchement temporaire d'une entrée de signaux de démarrage, la levée temporaire d'un blocage du moteur électrique (30) ou la désactivation temporaire d'une fonction de surveillance ou de commande du moteur électrique (30) après le constat de l'anomalie pendant une durée (ΔT) prédéfinie ou jusqu'à la fin de la phase de démarrage du moteur à combustion interne.

3. Procédé selon l'une quelconque des revendications précédentes, l'au moins une valeur de paramètre de fonctionnement comprenant une ou plusieurs des grandeurs suivantes :
une valeur de signal de sortie de capteur fournie par un capteur du moteur électrique (30) ;
une valeur de signal de sortie d'élément de commande, une valeur de signal d'entrée d'élément de commande, un résultat intermédiaire d'élément de commande, un résultat d'autotest d'élément de commande, un rapport de tâtonnement du courant de bobinage de phase, un couple de rotation d'anomalie servant de différence entre un couple théorique de rotation et un couple réel de rotation, un couple théorique de rotation ou un couple réel de rotation étant respectivement prévus par un élément de commande (50) du moteur électrique ;
une température, un couple de rotation, une vitesse de rotation, un courant d'excitation, une tension de bobinage de phase, un courant de bobinage de phase, une position de phase d'un courant de bobinage ou une résistance intérieure de bobinage du moteur électrique (30).

4. Procédé selon l'une quelconque des revendications précédentes, avec une étape de surveillance du moteur électrique (30), la surveillance comprenant le constat d'une anomalie (130, 150), la surveillance comprenant au moins un des niveaux de surveillance (a) - (c) suivants :
(a) surveillance et coordination des couples de rotation du moteur électrique (30) et des couples de rotation d'un entraînement en sortie du véhicule relié à lui, calcul du couple théorique de rotation et du couple réel de rotation du moteur électrique (30) et vérification du caractère plausible des signaux de capteur d'un capteur du moteur électrique ;
(b) surveillance d'au moins une des fonctions du niveau de surveillance (a), surveillance des calculs du niveau de surveillance (a), surveillance des signaux de capteur vérifiés au niveau de surveillance (a) et détection des anomalies de capteur ; et
(c) surveillance de la capacité de fonctionnement desdits dispositifs fournissant les fonctions, calculs, surveillances, détections et vérifications prévus aux niveaux de surveillance (a) et (b).

5. Procédé selon l'une quelconque des revendications précédentes, la limitation au moins partielle du fonctionnement du moteur électrique (30) comprenant :
la réinitialisation d'un élément de commande (40, 50) commandant le fonctionnement du moteur électrique (30), comprenant : la réinitialisation de quelques-uns ou de l'ensemble des paramètres d'état de l'élément de commande (40, 50) à une valeur de départ, la déconnexion d'un étage final commandant le moteur électrique (30), la limitation de la puissance maximale de l'étage final à une valeur de puissance de fonctionnement de base par limitation d'un signal de commande de l'étage final ou une combinaison de ceux-ci ;
l'introduction d'une limitation du fonctionnement de l'étage final par rapport à une durée d'excitation, à une puissance de sortie moyenne, à une puissance de sortie de pointe de l'étage final ou à une combinaison de ceux-ci en plaçant le moteur électrique (30) dans un état de fonctionnement de secours ; ou
la déconnexion et le blocage (160, 180) du moteur électrique (30), d'un élément de commande (50) du moteur électrique, de l'étage final du moteur électrique ou d'un système d'entraînement en entrée englobant le moteur électrique (30), le blocage pouvant être levé par le signal de démarrage du démarreur ou par une réinitialisation en atelier.

6. Procédé selon l'une quelconque des revendications précédentes, un élément de commande de mode de conduite de l'entraînement hybride étant limité, lorsqu'une anomalie est constatée, à tous les modes de fonctionnement dans lesquels le moteur électrique n'est pas entraîné comme unique groupe d'entraînement en conduite.

7. Élément de commande doté d'une sortie de signal de réglage prévue pour le raccordement et la commande d'un moteur électrique (30) d'un entraînement hybride et d'une entrée de paramètre de fonctionnement reliée au moteur électrique pour recevoir au moins un paramètre de fonctionnement du moteur électrique ;
l'élément de commande étant conçu pour faire fonctionner le moteur électrique (30) tant comme démarreur d'un moteur à combustion interne (10) de l'entraînement hybride que comme groupe d'entraînement en conduite de l'entraînement hybride ; et
l'élément de commande étant en outre conçu pour identifier une anomalie dans le moteur électrique (30) par analyse (150) de l'au moins un paramètre de fonctionnement, une anomalie au niveau d'au moins un capteur relié au moteur électrique (30) par analyse (150) des signaux obtenus au niveau de l'entrée de paramètre de fonctionnement, une anomalie d'au moins une composante de commande de l'élément de commande par surveillance de l'au moins une composante de commande ou une combinaison de ces anomalies ;
l'élément de commande comprenant une unité de commande à double fonction (40) reliée à lui faisant fonctionner l'élément de commande du moteur électrique (30) comme groupe d'entraînement en conduite ainsi que l'élément de commande du moteur électrique (30) comme démarreur d'un moteur à combustion interne (10) de l'entraînement hybride et conçue, en cas d'anomalie, pour commander le moteur électrique (30) de façon à le faire fonctionner comme démarreur (190), et, indépendamment du fonctionnement comme démarreur, en cas d'anomalie, pour limiter au moins en partie le fonctionnement du moteur électrique (30) comme groupe d'entraînement en conduite.

8. Élément de commande selon la revendication 7, l'unité de commande à double fonction (40) comprenant un circuit logique relié à elle comportant une entrée de signal d'anomalie dont le niveau rend compte de la présence de l'anomalie et comprenant une entrée de signaux de démarrage, le circuit logique comportant en outre une entrée de souhait de démarrage dont le niveau rend compte du souhait du conducteur de démarrer l'entraînement hybride ou le moteur à combustion interne (10) de l'entraînement hybride, le circuit logique reliant de façon logique les deux niveaux et en présence de l'anomalie sans souhait de démarrage simultané, contraignant l'unité de commande à double fonction à limiter en partie ou en totalité le fonctionnement du moteur électrique (30) comme groupe d'entraînement en conduite et, en présence de l'anomalie avec un souhait de démarrage simultané, contraignant l'unité de commande à double fonction (40) à faire fonctionner le moteur électrique (30) comme démarreur.

9. Élément de commande selon la revendication 7 ou 8, comportant en outre un circuit retardateur (ΔT) conçu pour retenir un signal d'anomalie dont le niveau rend compte de l'anomalie au niveau d'une entrée de retardement du circuit retardateur pendant une certaine durée et pour ne le retransmettre qu'après écoulement de ladite durée à au moins un composant de l'élément de commande par le biais d'une sortie retardée du circuit retardateur (ΔT), limitant en cas d'anomalie le fonctionnement du moteur électrique (30) comme démarreur, au moins un composant de l'élément de commande limitant au moins en partie en cas d'anomalie le fonctionnement du moteur électrique (30) comme groupe d'entraînement en conduite recevant un signal correspondant au signal reçu au niveau de l'entrée de retardement et correspondant à la durée au moins d'une phase de démarrage du moteur à combustion interne.

10. Élément de commande selon l'une quelconque des revendications 7 à 9, comprenant une sortie de commande pour un moteur électrique (30) servant de groupe d'entraînement en conduite d'un entraînement hybride et de démarreur d'un moteur à combustion interne (10) de l'entraînement hybride ;
l'élément de commande prenant la forme d'une unité de commande à double fonction et comprenant en outre une entrée d'anomalie dont le niveau rend compte d'une anomalie dans l'élément de commande du moteur électrique (30), dans un capteur du moteur électrique (30) ou dans le moteur électrique (30) lui-même ;
l'unité de commande à double fonction (40) étant conçue pour transmettre à la sortie de commande, pendant une durée prédéfinie maximale, un signal de souhait de démarrage servant à démarrer le moteur à combustion interne en présence d'un signal au niveau de l'entrée d'anomalie rendant compte d'une anomalie ; et
l'unité de commande à double fonction (40) comprenant un circuit retardateur d'une durée correspondant au moins à la durée d'une phase de démarrage du moteur à combustion interne (10) ou l'unité de commande à double fonction comprenant une entrée d'état de moteur à combustion interne avec une valeur d'état, la durée prenant fin lorsque la valeur d'état rend compte de la fin de la phase de démarrage.
